(19) Europäisches Patentamt / European Patent Office / Office européen des brevets

(11) **EP 3 253 540 B1**

(12) **EUROPÄISCHE PATENTSCHRIFT**

(45) Veröffentlichungstag und Bekanntmachung des Hinweises auf die Patenterteilung:
**11.08.2021 Patentblatt 2021/32**

(21) Anmeldenummer: **16703913.0**

(22) Anmeldetag: **03.02.2016**

(51) Int Cl.:
**B25J 9/16** $^{(2006.01)}$

(86) Internationale Anmeldenummer:
**PCT/EP2016/000172**

(87) Internationale Veröffentlichungsnummer:
**WO 2016/124330 (11.08.2016 Gazette 2016/32)**

(54) **VERFAHREN ZUM JUSTIEREN EINES DREHMOMENTSENSORS EINES ROBOTERARMS UND ROBOTER MIT EINEM ROBOTERARM UND EINER STEUERVORRICHTUNG**

METHOD FOR ADJUSTING A TORQUE SENSOR OF A ROBOT ARM AND ROBOT COMPRISING A ROBOT ARM AND A CONTROL DEVICE

PROCÉDÉ DE RÉGLAGE D'UN CAPTEUR DE COUPLE D'UN BRAS DE ROBOT ET ROBOT POURVU D'UN BRAS ET D'UN DISPOSITIF DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2015 DE 102015202076**

(43) Veröffentlichungstag der Anmeldung:
**13.12.2017 Patentblatt 2017/50**

(73) Patentinhaber: **KUKA Deutschland GmbH 86165 Augsburg (DE)**

(72) Erfinder: **FÜRSTENBERGER, Matthias 86152 Augsburg (DE)**

(74) Vertreter: **Tillmann, Axel
KUKA Aktiengesellschaft
Patentabteilung CLD-IP
Postfach 43 12 69
86072 Augsburg (DE)**

(56) Entgegenhaltungen:
**DE-A1-102013 212 433    US-A1- 2008 028 824
US-B2- 8 649 906**

**Beschreibung**

Die Erfindung betrifft ein Verfahren zum Justieren eines Drehmomentsensors eines Roboterarms und einen Roboter, der einen Roboterarm und eine Steuervorrichtung aufweist. Roboter sind Arbeitsmaschinen, die zur automatischen Handhabung und/ oder Bearbeitung von Objekten mit Werkzeugen ausgerüstet werden können und in mehreren Bewegungsachsen beispielsweise hinsichtlich Orientierung, Position und Arbeitsablauf programmierbar sind. Roboter weisen Roboterarme mit mehreren, nacheinander angeordneten, mit Gelenken verbundenen Gliedern auf, die bezüglich Achsen mittels Antriebe relativ zueinander bewegt werden können. Die Antriebe sind vorzugsweise elektrische Antriebe und werden von einer programmierbaren Steuerung (elektronische Steuervorrichtung) des Roboters angesteuert, um während des Betriebs die Bewegungsabläufe des Roboters zu steuern bzw. zu regeln.

Die US 8,649,906 B2 offenbart einen Roboter mit einem Roboterarm, welcher mehrere, nacheinander angeordnete, mit Gelenken verbundene Glieder und Drehmomentsensoren aufweist. Die Glieder sind relativ zueinander bezüglich Drehachsen bewegbar und die Drehmomentsensoren sind vorgesehen, den Drehachsen zugeordnete Drehmomente zu messen.

Die US 2008/028824 A1 offenbart die Kalibration eines Roboterarms mittels Winkelmessungen, wobei ein Roboterarm von einer ersten Stellung durch Drehen um eine Rollachse um 180° in eine zweite Stellung gebracht wird und wobei ein Offset durch Berechnung eines Mittelwerts bestimmt wird.

Die Druckschrift DE 10 2013 212 433 A1 offenbart ein Verfahren zum Nullpunktabgleichen eines Drehmomentsensors an einem Manipulator, der mehrere über Gelenke verbundene Glieder aufweist, wobei wenigstens ein mittels eines Antriebs bewegliches Gelenk ein erstes Glied des Manipulators mit einem zweiten Glied des Manipulators drehbar verbindet und an dieses Gelenk wenigstens ein Drehmomentsensor gekoppelt ist, welcher wenigstens einen drehmomentabhängigen Messwert liefert, mit den Schritten:

(a) Lagern des ersten Glieds und des zweiten Glieds in einem örtlich stabilen Zustand;
(b) Antriebslosschalten zumindest des Antriebs desjenigen Gelenks, an welches der abzugleichende Momentsensor angekoppelt ist;
(c) Öffnen einer gegebenenfalls vorhandenen, geschlossenen Bremse desjenigen Gelenks, an welches der abzugleichende Momentsensor angekoppelt ist; und
(d) anschließendes Aufnehmen des drehmomentabhängigen Messwertes des abzugleichenden Momentsensors als Referenzwert eines drehmomentlosen Zustands des Gelenks.

Drehmomentsensoren können jedoch ein Offset-Drehmoment aufweisen, welches die Genauigkeit der Messung des Drehmoments negativ beeinflusst. Aufgrund des Offset-Drehmoments wird daher auch ohne äußere Belastung fälschlicherweise ein Drehmoment gemessen. Deshalb müssen Drehmomentsensoren in der Regel justiert bzw. abgeglichen werden.

Die Aufgabe der Erfindung ist es, eine relativ einfach zu realisierende Möglichkeit anzugeben, einen Drehmomentsensor eines Roboterarms zu justieren.

Die Aufgabe der Erfindung wird gelöst durch ein Verfahren zum Justieren eines Drehmomentsensors eines Roboterarms, wobei der Roboterarm als eine offene kinematische Kette ausgebildet ist, eine Befestigungsvorrichtung zum Befestigen eines Endeffektors, mehrere Gelenke, und mehrere, nacheinander angeordnete und mittels der Gelenke verbundene Glieder aufweist, wobei eines der Glieder ein, einen Anfang des Roboterarms bildendes Anfangsglied und ein weiteres der Glieder ein, ein Ende des Roboterarms bildendes Endglied ist, und das Endglied die Befestigungsvorrichtung umfasst, und wobei den Gelenken je eine Drehachse zugeordnet ist und die Glieder bezüglich der Drehachsen relativ zueinander bewegbar sind, wobei ein Teil der Drehachsen als Rollachsen und ein weiterer Teil der Drehachsen als Kippachsen ausgebildet sind, und wobei zumindest die dem Gelenk zwischen dem Endglied und dem Endglied vorgelagerten Glied zugeordnete Drehachse und die dem Gelenk zwischen dem Anfangsglied und dem Anfangsglied direkt nachgelagerten Glied zugeordnete Drehachse, als Rollachsen ausgeführt sind, und wobei der Drehmomentsensor vorgesehen ist, ein Drehmoment zu messen, welches einer der Drehachsen zugeordnet ist, aufweisend folgende Verfahrensschritte:

-   Messen eines ersten Drehmoments, welches der dem Drehmomentsensor zugeordneten Drehachse zugeordnet ist, in einer zum Justieren des Drehmomentsensors vorgesehenen ersten Stellung des Roboterarms und mittels des Drehmomentsensors,
-   Drehen eines Gliedes um eine als seine Rollachse ausgeführte Drehachse um 180°, insbesondere gesteuert durch die Steuervorrichtung, sodass der Roboterarm für eine zum Justieren des Drehmomentsensors vorgesehene zweite Stellung ausgerichtet wird, wobei das um 180° gedrehte Glied um eine andere Drehachse gedreht wird, als die dem Drehmomentsensor zugeordnete Drehachse,
-   Messen in der zweiten Stellung und mittels des Drehmomentsensors eines zweiten Drehmoments, welches der dem Drehmomentsensor zugeordneten Drehachse zugeordnet ist,

- Ermitteln eines Offset-Drehmoments des Drehmomentsensors durch Berechnen des arithmetischen Mittelwertes des gemessenen ersten und zweiten Drehmomentes, und
- Justieren des Drehmomentsensors in Abhängigkeit des berechneten Offset-Drehmoments.

Ein weiterer Aspekt der Erfindung betrifft einen Roboter, aufweisend

- einen Roboterarm, der als eine offene kinematische Kette ausgebildet ist, einen Drehmomentsensor, eine Befestigungsvorrichtung zum Befestigen eines Endeffektors, mehrere Gelenke, und mehrere, nacheinander angeordnete und mittels der Gelenke verbundene Glieder aufweist, welche bezüglich Drehachsen relativ zueinander bewegbar sind, wobei der Drehmomentsensor vorgesehen ist, ein Drehmoment zu messen, welches einer der Drehachsen zugeordnet ist, eines der Glieder ein, einen Anfang des Roboterarms bildendes Anfangsglied und ein weiteres der Glieder ein ein Ende des Roboterarms bildendes Endglied des Roboterarms ist, das Endglied die Befestigungsvorrichtung umfasst, und ein Teil der Drehachsen als Rollachsen und ein weiterer Teil der Drehachsen als Kippachsen ausgebildet sind, wobei die dem Endglied zugeordnete Drehachse und die Drehachse, die dem Glied, das dem Anfangsglied direkt nachfolgt als Rollachsen ausgeführt sind,
- Antriebe mit Motoren, wobei zumindest die Motoren in und/oder am Roboterarm angeordnet sind, und wobei die Antriebe vorgesehen sind, die Glieder bezüglich ihrer Drehachsen zu bewegen,
- eine mit den Antrieben verbundene elektronische Steuervorrichtung, die eingerichtet ist, das erfindungsgemäße Verfahren durchzuführen.

Der Roboterarm ist demnach als eine offene kinematische Kette ausgebildet. Dies wird auch als offene Kinematik bezeichnet. Der Roboterarm umfasst mehrere, hintereinander angeordnete Glieder. Der Anfang der kinematischen Kette bildet das Anfangsglied. Dieses ist z.B. eine Roboterbasis oder ein Roboterfuß des Roboterarms. Das Ende des Roboterarms bildet das Endglied, das auch die Befestigungsvorrichtung umfasst. Die Befestigungsvorrichtung ist zur Aufnahme eines Endeffektors vorgesehen und wird in der Robotertechnik üblicherweise als Flansch bezeichnet.

Die Glieder sind mittels der Gelenke verbunden und bezüglich Drehachsen drehbar gelagert. Zumindest die dem Endglied zugeordnete Drehachse, also diejenige Drehachse, bezüglich der das Endglied drehbar gelagert ist, ist als Rollachse ausgebildet. Auch das dem Anfangsglied nachfolgende Glied ist bezüglich einer als Rollachse ausgeführten Drehachse drehbar gelagert. Eine Rollachse zeichnet sich insbesondere dadurch aus, dass die Drehachse koaxial zu den Körperachsen der an das zugeordnete Gelenk, das auch als fluchtendes Gelenk bezeichnet wird, anschließenden Gliedern orientiert ist. Eine Rollachse kann z.B. dadurch realisiert werden, indem das entsprechende Gelenk als ein dem Fachmann der Robotik allgemein bekanntes Torsionsglied ausgeführt ist.

Die restlichen Drehachsen können Rollachsen und Kippachsen sein.

Eine Kippachse zeichnet sich insbesondere dadurch aus, dass die Drehachse senkrecht zu den Körperachsen der an das zugehörige Gelenk, das auch als nicht-fluchtendes Gelenk bezeichnet wird) anschließenden Gliedern orientiert ist. Eine Kippachse kann z.B. dadurch realisiert werden, indem das entsprechende Gelenk als ein dem Fachmann der Robotik allgemein bekanntes Revolverglied oder Rotationsglied ausgeführt ist.

Der Roboterarm weist ferner den Drehmomentsensor auf. Der Drehmomentsensor ist einer der Drehachsen zugeordnet und ist eingerichtet, das dieser Drehachse zugeordnete Drehmoment zu messen.

Es kann auch vorgesehen sein, dass der Roboterarm mehrere Drehmomentsensoren umfasst, sodass Drehmomente mehrerer Drehachsen, wenn nicht gar aller Drehachsen gemessen werden können.

Das mit dem Drehmomentsensor gemessene Drehmoment umfasst die tatsächliche äußere Belastung, also das tatsächliche, der entsprechenden Drehachse zugeordnete Drehmoment, gegebenenfalls ein Reibmoment, welches durch Reibung im Gelenk entsteht, und ein Offset-Drehmoment.

Um nun das Offset-Drehmoment des Drehmomentsensors zu bestimmen, um danach den Drehmomentsensor justieren zu können, wird erfindungsgemäß zunächst in der ersten Stellung des Roboterarms das der entsprechenden Drehachse zugeordnet Drehmoment mit dem Drehmomentsensor gemessen (erstes gemessenes Drehmoment).

Gemäß einer Ausführungsform des erfindungsgemäßen Verfahrens kann es vorgesehen sein, dass der Roboterarm in der ersten Stellung derart ausgerichtet wird, dass die Rollachsen parallel zueinander ausgerichtet sind. Dies wird durch Bewegen der Glieder relativ zu ihren Drehachsen erreicht. Die Glieder werden insbesondere automatisiert gesteuert durch die elektronische Steuervorrichtung bewegt, indem z.B. die Antriebe geeignet angesteuert werden.

Danach wird insbesondere gesteuert durch die elektronische Steuervorrichtung eines der Glieder um seine als Rollachse ausgeführte Drehachse um 180° gedreht, sodass der Roboterarm für eine zum Justieren des Drehmomentsensors vorgesehene zweite Stellung ausgerichtet wird. Das um 180° gedrehte Glied ist ein anderes Glied als das, dessen Drehachse dem Drehmomentsensor zugeordnet ist.

Wenn der Roboterarm in seiner ersten Stellung derart ausgerichtet ist, dass die Rollachsen parallel zueinander ausgerichtet sind, sind, da eine Drehung um eine Rollachse erfolgt, die Rollachsen in der zweiten Stellung auch parallel zueinander. Anschließend wird mit dem Drehmomentsensor das zweite Drehmoment gemessen.

Die Stellungen sind so gewählt, dass die äußeren Belastungen in entgegengesetzte Richtungen zeigen und sich bei Verrechnung der gemessenen Drehmomente aufheben.

Das Offset-Drehmoment des Drehmomentsensors kann anschließend durch Berechnen des arithmetischen Mittelwertes der gemessenen Drehmomente erhalten werden, um daraufhin dem Drehmomentsensor in Abhängigkeit des berechneten Offset-Drehmoments zu justieren.

Der Drehmomentsensor wird insbesondere dadurch justiert, indem nach dem Ermitteln des Off-Set Drehmoments das im Weiteren mit dem Drehmoment sensor gemessene Drehmoment durch das berechnete Offset-Drehmoment bereinigt wird.

Das Justieren des Drehmomentsensors wird also bei mehreren, definierten Achswinkeln der anderen Gelenke, d.h. nicht des bei dem Justieren des Drehmomentsensors betrachteten Gelenks durchgeführt, um die äußere Belastung berücksichtigen zu können.

Um ein gegebenenfalls vorhandenes Reibmoment zu berücksichtigen, kann es vorzugsweise vorgesehen sein, für jede der für das Justieren des Drehmomentsensors vorgesehenen Stellungen des Roboterarms, zwei Drehmomente mittels des Drehmomentsensors zu messen, wobei für jede der Stellungen das Glied des Roboterarms, welches um diejenige Drehachse drehbar gelagert ist, welche dem Drehmomentsensor zugeordnet ist, jeweils aus beiden möglichen Anfahrtsrichtungen in die entsprechende, für das Justieren des Drehmomentsensors vorgesehene Stellung bewegt wird. Dabei reicht eine Bewegung des fraglichen Glieds um seine Drehachse um wenige Grad, z.B. um +/- 5°, sodass ein Justieren auch bei einem relativ eingeschränkten Bauraum möglich ist. Es wird hierbei in beiden Anfahrtsrichtungen ein betragsmäßig identischer Einfluss der Reibung angenommen.

Beim betrachteten Gelenk wird z.B. bei einem Achswinkel von 0° der entsprechenden Drehachse durch Anfahren von beiden Richtungen das Reibmoment ermittelt und ebenfalls berücksichtigt. Die betrachtete Drehachse wird nicht um 180° verfahren.

Der Drehmomentsensor kann z.B. einer Rollachse zugeordnet sein. In diesem Fall werden vorzugsweise die Glieder, insbesondere gesteuert durch die Steuervorrichtung, derart bewegt, so dass der Roboterarm für die zum Justieren des Drehmomentsensors vorgesehene erste Stellung derart ausgerichtet wird, dass die dem Drehmomentsensor zugeordnete, als Rollachse ausgeführte Drehachse und die Drehachse, welche dem Glied zugeordnet ist, das um 180° gedreht wird, parallel, insbesondere entlang einer gemeinsamen Geraden, ausgerichtet sind.

Vorzugsweise ist das um 180° gedrehte Glied, ausgehend von dem Glied, das um diejenige als Rollachse ausgeführte Drehachse drehbar gelagert ist, deren zugeordneter Drehmomentsensor justiert wird, das nächstmögliche, dem Anfangsglied zugewandte, um eine Rollachse drehbar gelagerte Glied. In diesem Fall ist das Glied, welches um 180° gedreht wird, zwischen dem Anfangsglied und dem Glied angeordnet, welches um diejenige Drehachse drehbar gelagert ist, der der Drehmomentsensor zugeordnet ist.

Eine äußere Belastung der Rollachsen in einer Stellung des Roboterarms, in der zumindest diese Rollachsen parallel zueinander ausgerichtet sind, ergibt sich insbesondere bei einem asymmetrischen d.h. von einem nicht auf der betrachteten Rollachse liegenden Schwerpunkt der Komponenten des Roboterarms oberhalb der betrachteten Rollachse, d.h. der dem Endglied zugewandten Komponenten ab der fraglichen Rollachse und gegebenenfalls eines an der Befestigungsvorrichtung befestigten End-Effektors, bei einer von der vertikalen Ausrichtung abweichenden Orientierung des Roboterarms bzw. seiner zueinander parallelen Rollachsen. Um dies zu berücksichtigen, werden vorzugsweise zwei Stellungen angefahren, zwischen denen vorzugsweise die zur betrachteten Rollachse bzw. dessen Drehmomentsensor nächstniedrigere Rollachse um 180° gedreht wird, d.h. vorzugsweise eine Rollachse, die ausgehend von der fraglichen Rollachse dem Anfangsglied zugewandt ist.

Bei der Justage der Rollachse, um die das Glied, welches dem Anfangsglied direkt nachfolgt, drehbar gelagert ist, werden vorzugsweise zwei Stellungen angefahren, zwischen denen vorzugsweise die zur betrachteten Rollachse bzw. dessen Drehmomentsensor nächsthöhere Rollachse um 180° gedreht wird, d.h. vorzugsweise eine Rollachse, die ausgehend von der fraglichen Rollachse dem Endglied zugewandt ist. Der Schwerpunkt des Gliedes oder der Glieder zwischen der bei der Justage betrachteten Rollachse und der um 180° gedrehten Rollachse muss hierbei vorzugsweise auf der zu justierenden Rollachse liegen.

Vorzugsweise wird die betrachtete Rollachse von beiden Seiten angefahren, um den Reibungseinfluss zu berücksichtigen. Daraus ergeben sich vier Messwerte bzw. gemessene Drehmomente (zwei Stellungen mal zwei Anfahrrichtungen), die gemittelt werden. Der arithmetische Mittelwert stellt das Offset-Drehmoment des Drehmomentsensors dar.

Um eine Überkompensation zu vermeiden, ist es auch denkbar, lediglich einen prozentualen Anteil des ermittelten Offset-Drehmoments für die Offsetkorrektur zu verwenden (z.B. 80% des Offset-Drehmoments).

Die dem Drehmomentsensor zugeordnete Drehachse kann alternativ eine Kippachse sein. In diesem Fall weist das erfindungsgemäße Verfahren vorzugsweise folgende Verfahrensschritte auf:

- insbesondere gesteuert durch die Steuervorrichtung, Drehen eines weiteren Gliedes um seine als Rollachse ausgeführte Drehachse um 180°, sodass der Roboterarm für eine zum Justieren des Drehmomentsensors vorgesehene dritte Stellung ausgerichtet wird, und mittels des Drehmomentsensors, Messen eines dritten Drehmoments, welches der dem Drehmomentsensor zugeordneten Drehachse zugeordnet ist, und

- insbesondere gesteuert durch die Steuervorrichtung, Drehen des Gliedes um seine als Rollachse ausgeführte Drehachse um 180°, sodass der Roboterarm für eine zum Justieren des Drehmomentsensors vorgesehene vierte Stellung ausgerichtet wird, und mittels des Drehmomentsensors, Messen eines vierten Drehmoments, welches der dem Drehmomentsensor zugeordneten Drehachse zugeordnet ist.

Vorzugsweise werden die Glieder, insbesondere gesteuert durch die Steuervorrichtung, für die zum Justieren des Drehmomentsensors vorgesehene erste Stellung derart ausgerichtet, dass die als Rollachsen ausgeführten Drehachsen, welche den Gliedern zugeordnet sind, die um 180° gedreht werden, parallel, insbesondere entlang einer gemeinsamen Geraden, ausgerichtet sind.

Vorzugsweise ist das Glied oder das weitere Glied, welches um 180° gedreht wird, das Endglied, oder es ist zwischen dem Endglied und demjenigen Glied, welches relativ zur der dem Drehmomentsensor zugeordneten Drehachse drehbar gelagert ist, angeordnet. Das andere dieser Glieder, welches um 180° gedreht wird, ist vorzugsweise das Anfangsglied oder ist zwischen dem Anfangsglied und demjenigen Glied, welches relativ zur der dem Drehmomentsensor zugeordneten Drehachse drehbar gelagert ist, angeordnet.

Insbesondere wenn das Glied oder das weitere Glied, welches um 180° gedreht wird, das Endglied oder zwischen dem Endglied und demjenigen Glied, welches relativ zur der dem Drehmomentsensor zugeordneten Drehachse drehbar gelagert ist, angeordnet ist, dann ist der Roboterarm vorzugsweise derart ausgeführt, dass die dem entsprechenden Glied zugeordnete Drehachse und die dem Drehmomentsensor zugeordnete Drehachse sich schneiden und eine Ebene bilden, in der der Schwerpunkt der Glieder liegt, die ab der dem Drehmomentsensor zugeordneten Drehachse dem Endglied zugewandt sind.

Ist die Drehachse eine Kippachse, dann wird somit je nach Ausführungsform des erfindungsgemäßen Verfahrens für das Justieren des Drehmomentsensors Folgendes durchgeführt:
Eine äußere Belastung auf die Gelenke der Kippachsen entsteht insbesondere dann, sobald die Orientierung des Roboterarms in den für das Justieren des entsprechenden Drehmomentsensors vorgesehenen Stellungen von einer vertikalen Ausrichtung abweicht - dies trifft insbesondere bei einem symmetrischen Schwerpunkt des Roboterarms bzw. derjenigen Komponenten, die ab der fraglichen Kippachse der Befestigungsvorrichtung zugewandt sind - oder diejenigen Komponenten, die ab der fraglichen Kippachse der Befestigungsvorrichtung zugewandt sind, einen asymmetrischen Schwerpunkt aufweisen, was z.B. auch durch einen an der Befestigungsvorrichtung befestigten Endeffektor erreicht werden kann.

Zum Justieren eines einer Kippachse zugeordneten Drehmomentsensors werden vorzugsweise jeweils vier Achspositionen angefahren, d.h. vier für das Justieren vorgesehene Stellungen des Roboterarms, zwischen denen vorzugsweise die das dem Anfangsglied direkt nachfolgende Glied um seine als Rollachse ausgebildete Drehachse und die zur betrachteten Drehachse nächsthöhere als Rollachse ausgebildete Drehachse um jeweils 180° gedreht wird.

Alternativ kann zum Justieren eines einer Kippachse zugeordneten Drehmomentsensors die Anzahl an Achspositionen auf zwei reduziert werden, d.h. zwei für das Justieren vorgesehene Stellungen des Roboterarms angefahren werden, indem zwischen den Achspositionen sowohl vorzugsweise die das dem Anfangsglied direkt nachfolgende Glied um seine als Rollachse ausgebildete Drehachse, als auch die zur betrachteten Drehachse nächsthöhere als Rollachse ausgebildete Drehachse um jeweils 180° gedreht wird.

Es werden ausschließlich Rollachsen um 180° verfahren. Die Stellungen sind so gewählt, dass die äußeren Belastungen in entgegengesetzte Richtung zeigen und sich bei Verrechnung der gemessenen Drehmomente aufheben.

Vorzugsweise kann darüber hinaus zur Berücksichtigung der Reibungseffekte (Reibmomente) in der betrachteten Kippachse der Achswinkel von beiden Seiten angefahren werden, und jeweils das Drehmoment mit dem Drehmomentsensor gemessen werden. Insgesamt werden somit vorzugsweise acht Messwerte (vier Stellungen mal zwei Anfahrrichtungen) aufgezeichnet, die gemittelt werden. Der arithmetische Mittelwert stellt das Offset-Drehmoment des Drehmomentsensors dar.

Um eine Überkompensation zu vermeiden, ist es auch denkbar, lediglich einen prozentualen Anteil des ermittelten Offset-Drehmoments für die Offsetkorrektur zu verwenden (z.B. 80% des Offset-Drehmoments).

Die Drehung der Rollachsen um 180° erfolgt vorzugsweise durch ein Anfahren der Achspositionen mit Achswinkeln von +/-90°. Um die äußere Belastung auf den Drehmomentsensor beim Justieren zu verringern, kann alternativ bei Bedarf das Glied, das dem Anfangsglied direkt nachfolgt, um seine als Rollachse ausgebildete Drehachse anstelle zwischen +/- 90° zwischen zwei anderen entgegengesetzten Achspositionen z.B. -160° und +20° verfahren werden. Entscheidend ist ein relativer Winkel von 180° zwischen den beiden Achspositionen. Dies ist beispielsweise in einer Wandmontage des Roboters von Bedeutung. Einflüsse aus potentiellen Asymmetrien des Kalibrierfaktors des Drehmomentsensors können somit verringert, wenn nicht gar minimiert werden.

Mit dem erfindungsgemäßen Verfahren kann ein Justieren des Drehmomentsensors insbesondere sensitiver Roboter bei variablen Randbedingungen, wie sie insbesondere im Feld vorliegen, durchgeführt werden.

Ein Vorteil des erfindungsgemäßen Verfahrens kann die direkte Verwendung der Messdaten auch bei einer undefinierten äußeren Belastung der Drehmomentsensoren sein.

Ausführungsbeispiele der Erfindung sind exemplarisch in den beigefügten schematischen Zeichnungen dargestellt. Es zeigen:

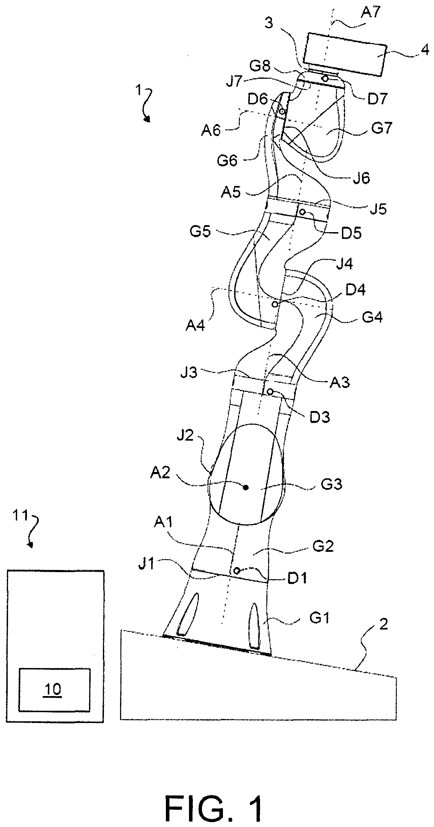

Figuren 1 bis 8    Verschiedene Stellungen eines Roboterarms, welcher mehrere, nacheinander angeordnete und bezüglich Drehachsen drehbar gelagerte Glieder aufweist.

Die Figuren 1 bis 8 zeigen jeweils einen Roboter, der einen Roboterarm 1 und eine elektronische Steuervorrichtung 10 aufweist.

Der Roboterarm 1 stellt eine offene Kinematik bzw. eine offene kinematische Kette dar, die zwei Enden umfasst.

Im Falle des vorliegenden Ausführungsbeispiels umfasst der Roboterarm 1 mehrere Gelenke und mehrere, nacheinander angeordnete und mittels der Gelenke verbundene Glieder, welche bezüglich Drehachsen relativ zueinander bewegbar sind.

Insbesondere umfasst der Roboterarm 1 ein erstes Glied G1, welches den Anfang der als offene kinematische Kette ausgebildeten Roboterarms 1 darstellt. Das erste Glied G1 ist als Roboterbasis oder Roboterfuß des Roboterarms 1 ausgeführt.

Der Roboterarm 1 ist im Falle des vorliegenden Ausführungsbeispiels mit seiner Roboterbasis bzw. seinem ersten Glied G1 mit dem Boden 2 fest verbunden.

Der Roboterarm 1 umfasst im Falle des vorliegenden Ausführungsbeispiels ein dem ersten Glied G1 nachfolgendes zweites Glied G2, das über ein erstes Gelenk J1 mit dem ersten Glied G1 verbunden ist und bezüglich einer ersten Drehachse A1 relativ zum ersten Glied G1 mittels des ersten Gelenks J1 drehbar gelagert ist. Im Falle des vorliegenden Ausführungsbeispiels ist die erste Drehachse A1 als eine Rollachse ausgeführt. Insbesondere wird unter einer Rollachse eine Drehachse verstanden, die koaxial zu den Körperachsen der an das zugehörige Gelenk anschließenden Glieder orientiert ist. Im Falle des vorliegenden Ausführungsbeispiels verläuft also die als Rollachse ausgeführte erste Drehachse A1 vorzugsweise koaxial zur Körperachse des zweiten Glieds G2. Um die erste Drehachse A1 als Rollachse auszuführen, ist im Falle des vorliegenden Ausführungsbeispiels das erste Gelenk J1 als ein dem Fachmann der Robotik allgemein bekanntes Torsionsgelenk ausgeführt.

Der Roboterarm 1 umfasst im Falle des vorliegenden Ausführungsbeispiels ein dem zweiten Glied G2 nachfolgendes drittes Glied G3, das über ein zweites Gelenk J2 mit dem zweiten Glied G2 verbunden ist und bezüglich einer zweiten Drehachse A2 relativ zum zweiten Glied G2 mittels des zweiten Gelenks J2 drehbar gelagert ist. Im Falle des vorliegenden Ausführungsbeispiels ist die zweite Drehachse A2 als eine Kippachse ausgeführt. Insbesondere wird unter einer Kippachse eine Drehachse verstanden, die senkrecht zu den Körperachsen der an das zugehörige Gelenk anschließenden Glieder orientiert ist. Im Falle des vorliegenden Ausführungsbeispiels verläuft also die als Kippachse ausgeführte zweite Drehachse A2 vorzugsweise senkrecht zur Körperachse des dritten Glieds G3. Um die zweite Drehachse A2 als Kippachse auszuführen, ist im Falle des vorliegenden Ausführungsbeispiels das zweite Gelenk J2 als ein dem Fachmann der Robotik allgemein bekanntes Rotationsgelenk oder als Revolvergelenk ausgeführt.

Der Roboterarm 1 umfasst im Falle des vorliegenden Ausführungsbeispiels ein dem dritten Glied G3 nachfolgendes viertes Glied G4, das über ein drittes Gelenk J3 mit dem dritten Glied G3 verbunden ist und bezüglich einer dritten Drehachse A3 relativ zum dritten Glied G3 mittels des dritten Gelenks J3 drehbar gelagert ist. Im Falle des vorliegenden Ausführungsbeispiels ist die dritte Drehachse A3 als eine Rollachse ausgeführt. Im Falle des vorliegenden Ausführungsbeispiels verläuft die als Rollachse ausgeführte dritte Drehachse A3 vorzugsweise koaxial zur Körperachse des vierten Glieds G4. Um die dritte Drehachse A3 als Rollachse auszuführen, ist im Falle des vorliegenden Ausführungsbeispiels das dritte Gelenk J3 als ein Torsionsgelenk ausgeführt.

Der Roboterarm 1 umfasst im Falle des vorliegenden Ausführungsbeispiels ein dem vierten Glied G4 nachfolgendes fünftes Glied G5, das über ein viertes Gelenk J4 mit dem vierten Glied G4 verbunden ist und bezüglich einer vierten Drehachse A4 relativ zum vierten Glied G4 mittels des vierten Gelenks J4 drehbar gelagert ist. Im Falle des vorliegenden Ausführungsbeispiels ist die vierte Drehachse A4 als eine Kippachse ausgeführt. Im Falle des vorliegenden Ausführungsbeispiels verläuft die als Kippachse ausgeführte vierte Drehachse A4 vorzugsweise senkrecht zur Körperachse des fünften Glieds G5. Um die vierte Drehachse A4 als Kippachse auszuführen, ist im Falle des vorliegenden Ausführungsbeispiels das vierte Gelenk J4 als ein Rotationsgelenk oder als ein Revolvergelenk ausgeführt.

Der Roboterarm 1 umfasst im Falle des vorliegenden Ausführungsbeispiels ein dem fünften Glied G5 nachfolgendes sechstes Glied G6, das über ein fünftes Gelenk J5 mit dem fünften Glied G5 verbunden ist und bezüglich einer fünften Drehachse A5 relativ zum fünften Glied G5 mittels des fünften Gelenks J5 drehbar gelagert ist. Im Falle des vorliegenden Ausführungsbeispiels ist die fünfte Drehachse A5 als eine Rollachse ausgeführt. Im Falle des vorliegenden Ausführungsbeispiels verläuft die als Rollachse ausgeführte fünfte Drehachse A5 vorzugsweise koaxial zur Körperachse des sechsten Glieds G6. Um die fünfte Drehachse A5 als Rollachse auszuführen, ist im Falle des vorliegenden Ausführungsbeispiels das fünfte Gelenk J5 als ein Torsionsgelenk ausgeführt.

Der Roboterarm 1 umfasst im Falle des vorliegenden Ausführungsbeispiels ein dem sechsten Glied G6 nachfolgendes siebtes Glied G7, das über ein sechstes Gelenk J6 mit dem sechsten Glied G6 verbunden ist und bezüglich einer sechsten Drehachse A6 relativ zum sechsten Glied G6 mittels des sechsten Gelenks J6 drehbar gelagert ist. Im Falle des vorliegenden Ausführungsbeispiels ist die sechste Drehachse A6 als eine Kippachse ausgeführt. Im Falle des vorliegenden Ausführungsbeispiels verläuft die als Kippachse ausgeführte sechste Drehachse A6 vorzugsweise des siebten Glieds G7. Um die sechste Drehachse A6 als Kippachse auszuführen, ist im Falle des vorliegenden Ausführungsbeispiels das sechste Gelenk J6 als ein Rotationsgelenk oder als ein Revolvergelenk ausgeführt.

Der Roboterarm 1 umfasst im Falle des vorliegenden Ausführungsbeispiels ein dem siebten Glied G7 nachfolgendes achtes Glied G8, das über ein siebtes Gelenk J7 mit dem siebten Glied G7 verbunden ist und bezüglich einer siebten Drehachse A7 relativ zum siebten Glied G7 mittels des siebten Gelenks J7 drehbar gelagert ist. Im Falle des vorliegenden Ausführungsbeispiels ist die siebte Drehachse A7 als eine Rollachse ausgeführt. Im Falle des vorliegenden Ausführungsbeispiels verläuft die als Rollachse ausgeführte siebte Drehachse A7 vorzugsweise koaxial zur Körperachse des achten Glieds G8. Um die siebte Drehachse A7 als Rollachse auszuführen, ist im Falle des vorliegenden Ausführungsbeispiels das siebte Gelenk J7 als ein Torsionsgelenk ausgeführt.

Im Falle des vorliegenden Ausführungsbeispiels ist der Roboterarm 1 derart ausgebildet, dass die Glieder G1-G8 derart relativ zueinander ausgerichtet werden können, sodass die als Rollachsen ausgebildeten Drehachsen A1, A3, A5, A7 zueinander parallel, insbesondere entlang einer einzigen Geraden verlaufen. In dieser Stellung können insbesondere auch die als Kippachsen ausgebildeten Drehachsen A2, A4, A6 zueinander parallel ausgerichtet werden.

Das achte Glied G8 umfasst im Falle des vorliegenden Ausführungsbeispiels eine Befestigungsvorrichtung 3 zum Befestigen eines Endeffektors 4. Das achte Glied G8 stellt das Ende des Roboterarms 1 dar.

Um den Roboter bzw. dessen Roboterarm 1 automatisch zu bewegen, umfasst der Roboter in allgemein bekannter Weise mit der Steuervorrichtung 10 verbundene Antriebe, die insbesondere elektrische Antriebe sind. Zumindest die Motoren bzw. die elektrischen Motoren der Antriebe sind im und/oder am Roboterarm 1, z.B. an dessen Struktur befestigt. Da die Motoren bzw. die Antriebe im Prinzip dem Fachmann bekannt sind, sind die Motoren bzw. die Antriebe der Übersicht halber nicht dargestellt.

Die gegebenenfalls zum Ansteuern der Motoren vorgesehenen, der Übersicht halber ebenfalls nicht dargestellten Leistungselektroniken der Antriebe können zumindest teilweise ebenfalls im und/oder am Roboterarm 1 befestigt sein. Die Leistungselektroniken können zumindest teilweise auch entfernt vom Roboterarm 1 angeordnet sein, z.B. in einem Steuerschrank 11, in dem auch die elektronische Steuervorrichtung 10 angeordnet sein kann.

Die Antriebe sind vorzugsweise geregelte Antriebe, insbesondere geregelte elektrische Antriebe.

Im Falle des vorliegenden Ausführungsbeispiels weist der Roboterarm 1 einen ersten Drehmomentsensor D1, einen zweiten Drehmomentsensor D2, einen dritten Drehmomentsensor D3, einen vierten Drehmomentsensor D4, einen fünften Drehmomentsensor D5, einen sechsten Drehmomentsensor D6 und einen siebten Drehmomentsensor D7 auf.

Der erste Drehmomentsensor D1 ist für ein Messen des der ersten Achse A1 zugeordneten Drehmoments vorgesehen, sodass die Signale des ersten Drehmomentsensors D1 ein Maß für das der ersten Achse A1 zugeordnete Drehmoment ist.

Der zweite Drehmomentsensor D2 ist für ein Messen des der zweiten Achse A2 zugeordneten Drehmoments vorgesehen, sodass die Signale des zweiten Drehmomentsensors D2 ein Maß für das der zweiten Achse A2 zugeordnete Drehmoment ist.

Der dritte Drehmomentsensor D3 ist für ein Messen des der dritten Achse A3 zugeordneten Drehmoments vorgesehen, sodass die Signale des dritten Drehmomentsensors D3 ein Maß für das der dritten Achse A3 zugeordnete Drehmoment ist.

Der vierte Drehmomentsensor D4 ist für ein Messen des der vierten Achse A4 zugeordneten Drehmoments vorgesehen, sodass die Signale des vierten Drehmomentsensors D4 ein Maß für das der vierten Achse A4 zugeordnete Drehmoment ist.

Der fünfte Drehmomentsensor D5 ist für ein Messen des der fünften Achse A5 zugeordneten Drehmoments vorgesehen, sodass die Signale des fünften Drehmomentsensors D5 ein Maß für das der fünften Achse A5 zugeordnete Drehmoment ist.

Der sechste Drehmomentsensor D6 ist für ein Messen des der sechsten Achse A6 zugeordneten Drehmoments vorgesehen, sodass die Signale des sechsten Drehmomentsensors D6 ein Maß für das der sechsten Achse A6 zugeordnete Drehmoment ist.

Der siebte Drehmomentsensor D7 ist für ein Messen des der siebten Achse A7 zugeordneten Drehmoments vorgesehen, sodass die Signale des siebten Drehmomentsensors D7 ein Maß für das der siebten Achse A7 zugeordnete Drehmoment ist.

Die Drehmomentsensoren D1-D7 sind mit der Steuervorrichtung 10 verbunden, sodass diese die von den Drehmomentsensoren D1-D7 erzeugten Signale auszuwerten vermag. Die Signale der Drehmomentsensoren D1-D7 sind vorzugsweise elektrische Spannungen.

Die Drehmomentsensoren D1-D7 können ein Offset-Drehmoment aufweisen, welches die Genauigkeit der Messung des Drehmoments negativ beeinflusst. Aufgrund des Offset-Drehmoments werden daher auch ohne äußere Belastung fälschlicherweise mit den Drehmomentsensoren D1-D7 Drehmomente gemessen. Den Offset-Drehmomenten sind entsprechende Offset-Signale bzw. Offset-Spannungen der Drehmomentsensoren D1-D7 zugeordnet. Um die Offset-Drehmomente zumindest teilweise zu kompensieren, werden die Drehmomentsensoren D1-D7 justiert bzw. abgeglichen. Dieses Justieren bzw. Abgleichen wird nachfolgend für den der zweiten Drehachse A2 zugeordneten zweiten Drehmomentsensor D2 und für den der dritten Drehachse A3 zugeordneten dritten Drehmomentsensor D3 beschrieben.

Zunächst wird das Justieren des der zweiten Drehachse A2 zugeordneten zweiten Drehmomentsensor D2 beschrieben. Die zweite Drehachse A2 ist eine Kippachse und das der zweiten Drehachse A2 zugeordnete zweite Gelenk J2 ist ein Rotationsgelenk oder ein Revolvergelenk.

Zunächst werden, gesteuert durch die Steuervorrichtung 10, die Glieder G1-G8 derart angesteuert, sodass die als Rollachsen ausgebildeten Drehachsen A1, A3, A5, A7 zueinander parallel, insbesondere entlang einer einzigen Geraden verlaufen, und somit eine für das Justieren des zweiten Drehmomentsensors D2 vorgesehene erste Stellung einnehmen. Diese ist in der Figur 1 gezeigt.

In der für das Justieren des zweiten Drehmomentsensors D2 vorgesehenen ersten Stellung wirkt u.a. auf die zweite Drehachse A2 ein Drehmoment, wodurch der zweite Drehmomentsensor D2 ein Signal, insbesondere eine elektrische Spannung erzeugt, die diesem Drehmoment zugeordnet ist. Das mit dem zweiten Drehmomentsensor D2 gemessene Drehmoment $M_{g,1}$ in der für das Justieren des zweiten Drehmomentsensors D2 vorgesehenen ersten Stellung umfasst die tatsächliche äußere Belastung, also das tatsächliche, der zweiten Drehachse A2 zugeordnete Drehmoment $M_1$, gegebenenfalls ein Reibmoment $M_{R,1}$, welches durch Reibung im Gelenk entsteht, und ein Offset-Drehmoment $M_{offset}$:

$$M_{g,1} = M_1 + M_{R,1} + M_{offset}$$

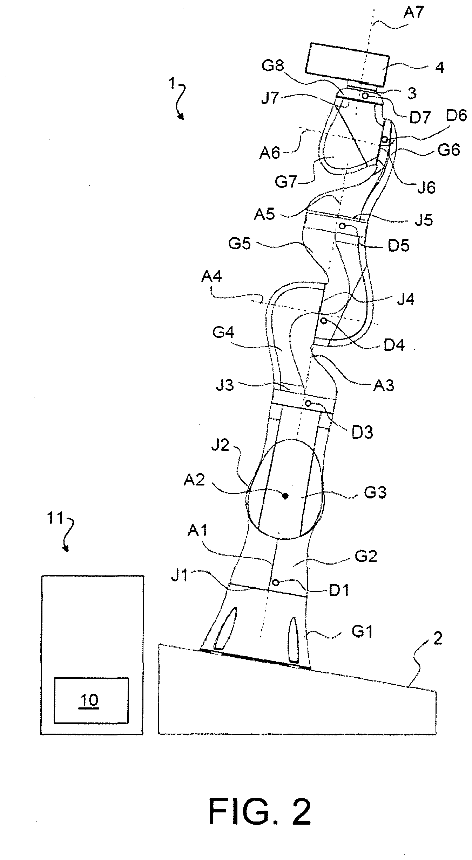

Anschließend wird, gesteuert durch die Steuervorrichtung 10, eines der Glieder des Roboterarms 1 bezüglich seiner Drehachse um 180° gedreht, welches relativ zur zweiten Drehachse A2 der Befestigungsvorrichtung 3 näher ist, also weiter am Ende des Roboterarms 1 angeordnet ist. Es wird aber lediglich ein Glied des Roboterarms 1 gedreht, welches bezüglich einer als Rollachse ausgeführten Drehachse ausgebildet ist. Im Falle des vorliegenden Ausführungsbeispiels wird das vierte Glied G4 relativ zu der als Rollachse ausgebildeten Drehachse A3 um 180° gedreht, wodurch eine in der Figur 2 gezeigte, für das Justieren des zweiten Drehmomentsensors D2 vorgesehene zweite Stellung des Roboterarms 1 entsteht. Dadurch ergibt sich ein mit dem zweiten Drehmomentsensor D2 gemessene Drehmoment $M_{g,2}$ in der für das Justieren des zweiten Drehmomentsensors D2 vorgesehenen zweiten Stellung, das die tatsächliche äußere Belastung, also das tatsächliche, der zweiten Drehachse A2 zugeordnete Drehmoment $M_2$, gegebenenfalls ein Reibmoment $M_{R,2}$, welches durch Reibung im Gelenk entsteht, und ein Offset-Drehmoment $M_{offset}$ umfasst:

$$M_{g,2} = M_2 + M_{R,2} + M_{offset}$$

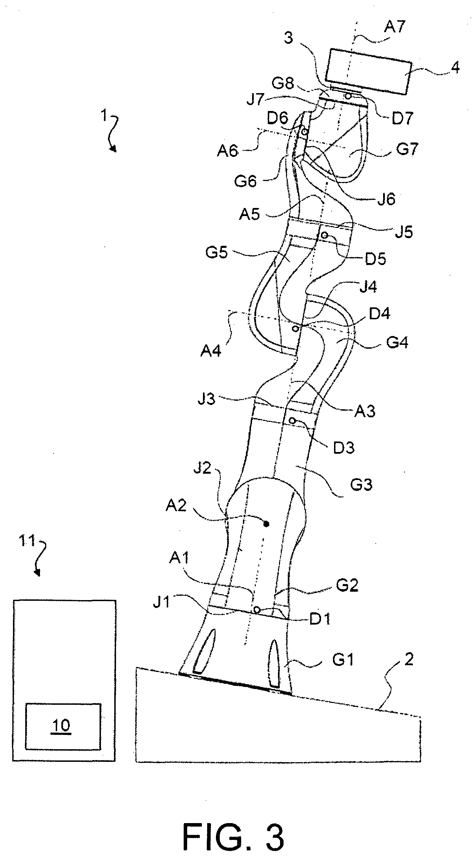

Anschließend wird, gesteuert durch die Steuervorrichtung 10, das zweite Glied G2 des Roboterarms 1 bezüglich der als Rollachse ausgebildeten ersten Drehachse A1 um 180° gedreht, wodurch eine in der Figur 3 gezeigte für das Justieren des zweiten Drehmomentsensors D2 vorgesehene dritte Stellung des Roboterarms 1 entsteht. Dadurch ergibt sich ein mit dem zweiten Drehmomentsensor D2 gemessene Drehmoment $M_{g,3}$ in der für das Justieren des zweiten Drehmomentsensors D2 vorgesehenen dritten Stellung.

Im Falle des vorliegenden Ausführungsbeispiels schneiden sich die als Rollachse ausgeführte dritte Drehachse A3 und die als Kippachse ausgebildete zweite Drehachse A2 rechtwinklig, wodurch eine Ebene definiert wird, in der der Schwerpunkt des Gliedes bzw. der Glieder liegt, das bzw. die sich zwischen diesen beiden Drehachsen, also im Falle des vorliegenden Ausführungsbeispiels die zweite Drehachse und die dritte Drehachse A3, befindet bzw. befinden. Dadurch weist die tatsächliche äußere Belastung, also das tatsächliche, der zweiten Drehachse A2 zugeordnete Drehmoment denselben Betrag auf wie das tatsächliche, der zweiten Drehachse A2 zugeordnete Drehmoment in der für das Justieren des zweiten Drehmomentsensors D2 vorgesehenen ersten Stellung, jedoch mit entgegengesetztem mathematischen Vorzeichen.

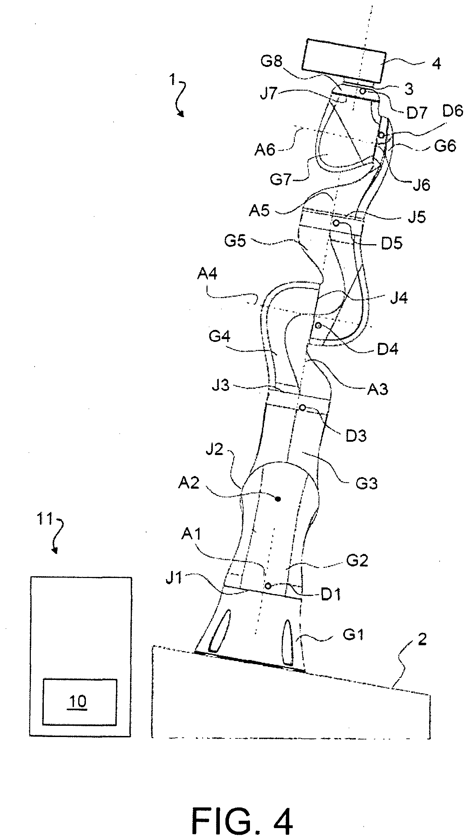

Anschließend wird, gesteuert durch die Steuervorrichtung 10, das vierte Glied G4 relativ zu der als Rollachse ausgebildeten Drehachse A3 um 180° gedreht, wodurch eine in der Figur 4 gezeigte für das Justieren des zweiten Drehmomentsensors D2 vorgesehene vierte Stellung des Roboterarms 1 entsteht. Dadurch ergibt sich ein mit dem zweiten Drehmomentsensor D2 gemessenes Drehmoment $M_{g,4}$ in der für das Justieren des zweiten Drehmomentsensors D2 vorgesehenen vierten Stellung.

Im Falle des vorliegenden Ausführungsbeispiels schneiden sich die als Rollachse ausgeführte dritte Drehachse A3 und die als Kippachse ausgebildete zweite Drehachse A2 rechtwinklig, wodurch eine Ebene definiert wird, in der der Schwerpunkt des Gliedes bzw. der Glieder liegt, das bzw. die sich zwischen diesen beiden Drehachsen, also im Falle des vorliegenden Ausführungsbeispiels die zweite Drehachse und die dritte Drehachse A3, befindet bzw. befinden. Dadurch weist die tatsächliche äußere Belastung, also das tatsächliche, der zweiten Drehachse A2 zugeordnete Drehmoment denselben Betrag auf wie das tatsächliche, der zweiten Drehachse A2 zugeordnete Drehmoment in der für das Justieren des zweiten Drehmomentsensors D2 vorgesehenen zweiten Stellung, jedoch mit entgegengesetztem mathematischen Vorzeichen.

Bei Vernachlässigung der Reibungseinflüsse kann danach das Offset-Drehmoment $M_{offset}$ dadurch berechnet werden, indem der arithmetische Mittelwert der mit dem zweiten Drehmomentsensor D2 gemessenen Drehmomente $M_{g,1}$, $M_{g,2}$, $M_{g,3}$, $M_{g,4}$ in den vier für das Justieren des zweiten Drehmomentsensors D2 vorgesehenen Stellungen des Roboterarms 1 berechnet wird:

$$M_{offset} = (M_{g,1} + M_{g,2} + M_{g,3} + M_{g,4}) / 4$$

Um die Reibung zu berücksichtigen, ist es im Falle des vorliegenden Ausführungsbeispiels vorgesehen, in jeder der für das Justieren des zweiten Drehmomentsensors D2 vorgesehenen vier Stellungen des Roboterarms 1 jeweils zweimal das Drehmoment mit dem zweiten Drehmomentsensor D2 zu messen, wobei jeweils das dritte Glied G3 jeweils aus beiden möglichen Anfahrtsrichtungen in die entsprechende Stellung bewegt wird. Somit ergeben sich insgesamt acht gemessene Drehmomente, sodass das Offset-Drehmoment $M_{offset}$ dadurch berechnet wird, indem der arithmetische Mittelwert aller acht gemessenen Drehmomente in den für das Justieren des zweiten Drehmomentsensors D2 vorgesehenen vier Stellungen des Roboterarms 1 berechnet wird.

Anschließend wird der zweite Drehmomentsensor D2 in Abhängigkeit des ermittelten Offset-Drehmoment $M_{offset}$ justiert. Um eine Überkompensation zu vermeiden, ist es auch denkbar, lediglich einen prozentualen Anteil des ermittelten Offset-Drehmoments zu verwenden, z.B. 80% des Offset-Drehmoments.

Nachfolgend wird das Justieren des der dritten Drehachse A3 zugeordneten dritten Drehmomentsensor D3 beschrieben. Die dritte Drehachse A3 ist eine Rollachse und das der dritten Drehachse A3 zugeordnete dritte Gelenk J3 ist ein Torsionsgelenk.

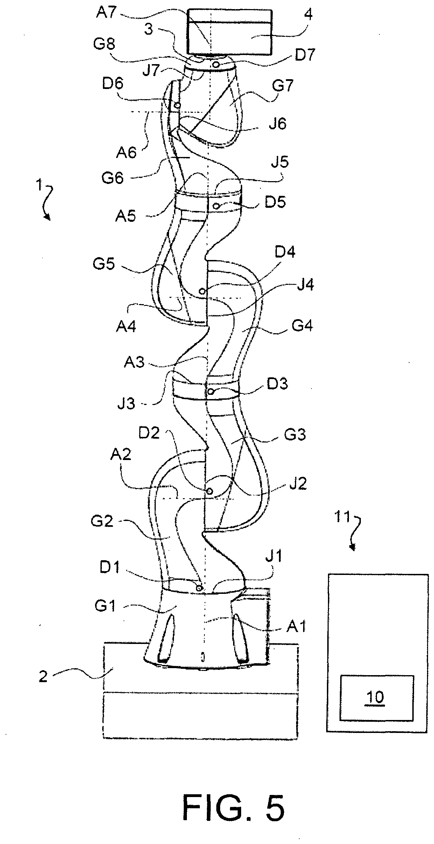

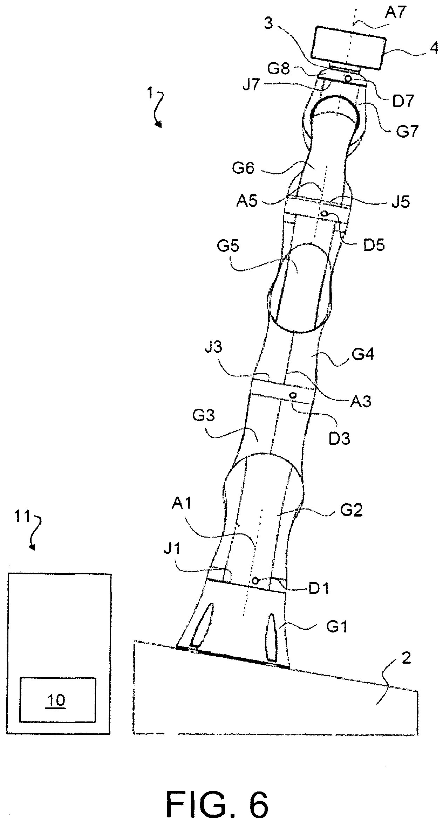

Zunächst werden, gesteuert durch die Steuervorrichtung 10, die Glieder G1-G8 derart angesteuert, sodass die als Rollachsen ausgebildeten Drehachsen A1, A3, A5, A7 zueinander parallel, insbesondere entlang einer einzigen Geraden verlaufen, und somit eine für das Justieren des dritten Drehmomentsensors D3 erste Stellung einnehmen. Diese ist in den Figuren 5 und 6 gezeigt.

In der für das Justieren des dritten Drehmomentsensors D3 vorgesehenen ersten Stellung wirkt u.a. auf die dritte Drehachse A3 ein Drehmoment, wodurch der dritte Drehmomentsensor D3 ein Signal, insbesondere eine elektrische Spannung erzeugt, die diesem Drehmoment zugeordnet ist. Das mit dem dritten Drehmomentsensor D3 gemessene Drehmoment in der ersten Stellung umfasst die tatsächliche äußere Belastung, also das tatsächliche, der dritten Drehachse A3 zugeordnete Drehmoment, gegebenenfalls ein Reibmoment, welches durch Reibung im Gelenk entsteht, und ein Offset-Drehmoment.

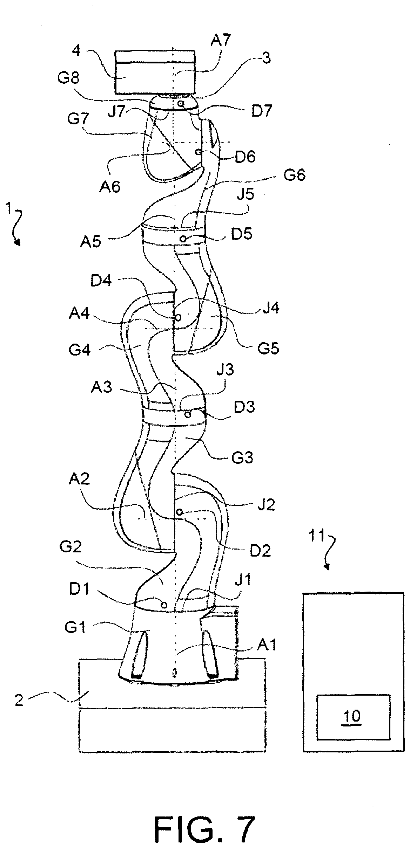

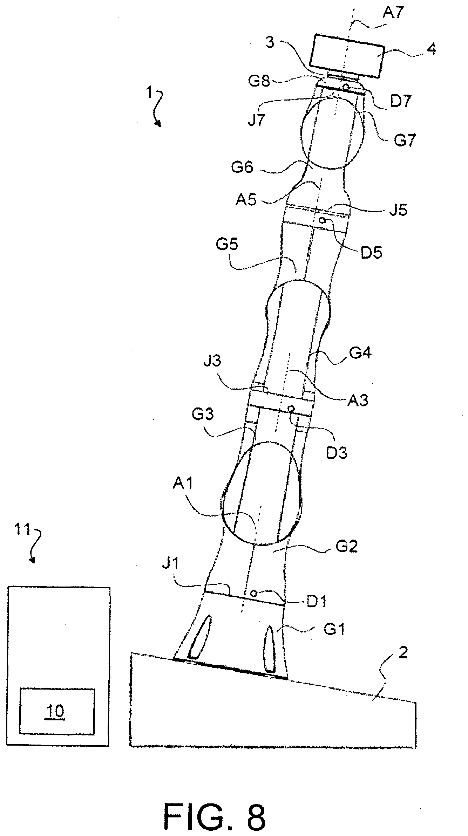

Anschließend wird, gesteuert durch die Steuervorrichtung 10, eines der Glieder des Roboterarms 1 bezüglich seiner als Rollachse ausgeführten Drehachse um 180° gedreht. Es wird jedoch nicht das dritte Glied G3, dessen zugeordneter dritter Drehmomentsensor D3 justiert wird, bewegt. Im Falle des vorliegenden Ausführungsbeispiels wird das zweite Glied G2 um die erste Drehachse A1 um 180° gedreht, wodurch eine in den Figuren 7 und 8 gezeigte, für das Justieren des dritten Drehmomentsensors D3 vorgesehene zweite Stellung des Roboterarms 1 entsteht. Dadurch ergibt sich ein mit dem dritten Drehmomentsensor D3 gemessene Drehmoment in der für das Justieren des dritten Drehmomentsensors D3 vorgesehenen zweiten Stellung.

Das mit dem dritten Drehmomentsensor D3 gemessene Drehmoment in der zweiten Stellung umfasst die tatsächliche äußere Belastung, also das tatsächliche, der dritten Drehachse A3 zugeordnete Drehmoment, gegebenenfalls ein Reibmoment, welches durch Reibung im Gelenk entsteht, und ein Offset-Drehmoment. Die tatsächliche äußere Belastung, also das tatsächliche, der dritten Drehachse A3 zugeordnete Drehmoment weißt dabei denselben Betrag auf wie das tatsächliche, der dritten Drehachse A3 zugeordnete Drehmoment in der für das Justieren des dritten Drehmomentsensors D3 vorgesehenen ersten Stellung, jedoch mit entgegengesetztem mathematischen Vorzeichen.

Danach wird das Offset-Drehmoment des dritten Drehmomentsensors D3 dadurch berechnet, indem der arithmetische Mittelwert der mit dem dritten Drehmomentsensor D3 gemessenen Drehmomente in beiden, für das Justieren des dritten Drehmomentsensors D3 vorgesehenen Stellungen des Roboterarms 1 berechnet wird.

Um im Falle des vorliegenden Ausführungsbeispiels die Reibung zu berücksichtigen, ist es im Falle des vorliegenden Ausführungsbeispiels vorgesehen, in jeder der beiden, für das Justieren des dritten Drehmomentsensors D3 vorgesehenen Stellungen des Roboterarms 1 das vierte Glied G4 jeweils zweimal das Drehmoment mit dem dritten Drehmomentsensor D3 zu messen, wobei jeweils das vierte Glied G4 jeweils aus beiden möglichen Anfahrtsrichtungen in die entsprechende, für das Justieren des dritten Drehmomentsensors D3 vorgesehenen Stellung bewegt wird. Somit ergeben sich insgesamt vier gemessene Drehmomente, sodass das Offset-Drehmoment des dritten Drehmomentsensors D3 dadurch berechnet wird, indem der arithmetische Mittelwert aller vier gemessenen Drehmomente in den beiden, für das Justieren des dritten Drehmomentsensors D3 vorgesehenen Stellungen des Roboterarms 1 berechnet wird.

Anschließend wird der dritte Drehmomentsensor D3 in Abhängigkeit des ermittelten Offset-Drehmoments für den dritten Drehmomentsensor D3 justiert bzw. abgeglichen. Um eine Überkompensation zu vermeiden, ist es auch denkbar, lediglich einen prozentualen Anteil des ermittelten Offset-Drehmoments des dritten Drehmomentsensors D3 zu verwenden, z.B. 80% des Offset-Drehmoments.

**Patentansprüche**

1. Verfahren zum Justieren eines Drehmomentsensors (D2, D3) eines Roboterarms (1), wobei der Roboterarm (1) als eine offene kinematische Kette ausgebildet ist, eine Befestigungsvorrichtung (3) zum Befestigen eines Endeffektors (4), mehrere Gelenke (J1-J7), und mehrere, nacheinander angeordnete und mittels der Gelenke (J1-J7) verbundene Glieder (G1-G8) aufweist, wobei eines der Glieder (G1-G8) ein, einen Anfang des Roboterarms (1) bildendes Anfangsglied (G1) und ein weiteres der Glieder ein, ein Ende des Roboterarms (1) bildendes Endglied (G8) ist, und das Endglied (G8) die Befestigungsvorrichtung (3) umfasst, und wobei den Gelenken (J1-J7) je eine Drehachse (A1-A7) zugeordnet ist und die Glieder (G1-G8) bezüglich der Drehachsen (A1-A7) relativ zueinander bewegbar sind, wobei ein Teil der Drehachsen (A1, A3, A5, A7) als Rollachsen und ein weiterer Teil der Drehachsen (A2, A4, A6) als Kippachsen ausgebildet sind, und wobei zumindest die dem Gelenk zwischen dem Endglied (G8) und dem Endglied (G8) vorgelagerten Glied (G7) zugeordnete Drehachse (A7) und die dem Gelenk zwischen dem Anfangsglied (G1) und dem Anfangsglied (g1) direkt nachgelagerten Glied (G1) zugeordnete Drehachse (A1), als Rollachsen ausgeführt sind, und wobei der Drehmomentsensor (D2, D3) vorgesehen ist, ein Drehmoment zu messen, welches einer der Drehachsen (A1-A7) zugeordnet ist, aufweisend folgende Verfahrensschritte:

   - Messen eines ersten Drehmoments, welches der dem Drehmomentsensor (D2, D3) zugeordneten Drehachse (A2, A3) zugeordnet ist, in einer zum Justieren des Drehmomentsensors (D2, D3) vorgesehenen ersten Stellung des Roboterarms (1) und mittels des Drehmomentsensors (D2, D3),
   - Drehen eines Gliedes (G2, G4) um eine als seine Rollachse ausgeführte Drehachse (A1, A7) um 180°, insbesondere gesteuert durch die Steuervorrichtung (10), sodass der Roboterarm (1) für eine zum Justieren des Drehmomentsensors (D2, D3) vorgesehene zweite Stellung ausgerichtet wird, wobei das um 180° gedrehte Glied (G2, G4) um eine andere Drehachse gedreht wird, als die dem Drehmomentsensor (D2, D3) zugeordnete Drehachse,
   - Messen in der zweiten Stellung und mittels des Drehmomentsensors (D2, D3) eines zweiten Drehmoments, welches der dem Drehmomentsensor (D2, D3) zugeordneten Drehachse (A2, A3) zugeordnet ist,
   - Ermitteln eines Offset-Drehmoments des Drehmomentsensors durch Berechnen des arithmetischen Mittelwertes des gemessenen ersten und zweiten Drehmomentes, und
   - Justieren des Drehmomentsensors (D2, D3) in Abhängigkeit des berechneten Offset-Drehmoments.

2. Verfahren nach Anspruch 1, aufweisend, für jede der für das Justieren des Drehmomentsensors (D2, D3) vorgesehenen Stellung des Roboterarms (1), Messen von zwei Drehmomenten mittels des Drehmomentsensors (D2, D3), wobei für jede der Stellungen das Glied des Roboterarms (1), welches um diejenige Drehachse (A2, A3) drehbar gelagert ist, welche dem Drehmomentsensor (D2, D3) zugeordnet ist, jeweils aus beiden möglichen Anfahrtsrichtungen in die entsprechenden, für das Justieren des Drehmomentsensors (D2, D3) vorgesehenen Stellungen bewegt wird.

3. Verfahren nach Anspruch 1 oder 2, bei dem diejenige Drehachse (A3), die dem Drehmomentsensor (D3) zugeordnet ist, als eine Rollachse ausgeführt ist, und aufweisend Bewegen der Glieder (G2-G8), insbesondere gesteuert durch die Steuervorrichtung (10), sodass der Roboterarm (1) für die zum Justieren des Drehmomentsensors (D3) vorgesehene erste Stellung derart ausgerichtet wird, dass die dem Drehmomentsensor (D3) zugeordnete, als Rollachse ausgeführte Drehachse (A3) und die Drehachse (A1), welche dem Glied (G2) zugeordnet ist, das um 180° gedreht wird, parallel, insbesondere entlang einer gemeinsamen Geraden, ausgerichtet sind.

4. Verfahren nach Anspruch 3, bei dem das um 180° gedrehte Glied (G2), ausgehend von dem Glied, das um diejenige als Rollachse ausgeführte Drehachse (A3) drehbar gelagert ist, deren zugeordneter Drehmomentsensor (D3) justiert wird, das nächstmögliche, dem Anfangsglied (G1) zugewandte, um eine Rollachse drehbar gelagerte Glied ist.

5. Verfahren nach Anspruch 3, bei dem die dem Drehmomentsensor zugeordnete Drehachse einem Glied zugeordnet ist, das das nächstmöglich folgende Glied ausgehend vom Anfangsglied (G1) mit einer zugeordneten Rollachse ist, und das um 180° gedrehte Glied wiederum das nächstmöglich folgende Glied mit einer zugeordneten Rollachse ist, und insbesondere bei dem der Schwerpunkt der Glieder, die zwischen der dem Drehmomentsensor zugeordneten Drehachse und der um 180° gedrehten Rollachse angeordnet sind, auf der der dem Drehmomentsensor zugeordneten Drehachse liegt.

6. Verfahren nach Anspruch 1 oder 2, bei dem diejenige Drehachse (A2), die dem Drehmomentsensor (D2) zugeordnet ist, als eine Kippachse ausgeführt ist.

7. Verfahren nach Anspruch 6, zusätzlich aufweisend folgende Verfahrensschritte:

- insbesondere gesteuert durch die Steuervorrichtung (10), Drehen eines weiteren Gliedes (G2, G4) um seine als Rollachse ausgeführte Drehachse um 180°, sodass der Roboterarm (1) für eine zum Justieren des Drehmomentsensors (D2) vorgesehene dritte Stellung ausgerichtet wird, und mittels des Drehmomentsensors (D2), Messen eines dritten Drehmoments, welches der dem Drehmomentsensor (D2) zugeordneten Drehachse (A2) zugeordnet ist, und
- insbesondere gesteuert durch die Steuervorrichtung, Drehen des Gliedes (G2, G4) um seine als Rollachse ausgeführte Drehachse um 180°, sodass der Roboterarm (1) für eine zum Justieren des Drehmomentsensors (D2) vorgesehene vierte Stellung ausgerichtet wird, und mittels des Drehmomentsensors (D2), Messen eines vierten Drehmoments, welches der dem Drehmomentsensor (D2) zugeordneten Drehachse (A2) zugeordnet ist.

8. Verfahren nach Anspruch 7, aufweisend Bewegen der Glieder (G2-G8), insbesondere gesteuert durch die Steuervorrichtung (10), sodass der Roboterarm (1) für die zum Justieren des Drehmomentsensors (D3) vorgesehene Stellung derart ausgerichtet wird, dass die als Rollachsen ausgeführten Drehachsen, welche den Gliedern zugeordnet sind, die um 180° gedreht werden, parallel, insbesondere entlang einer gemeinsamen Geraden, ausgerichtet sind.

9. Verfahren nach Anspruch 7 oder 8 , bei dem das Glied oder das weitere Glied, welches um 180° gedreht wird, das Endglied (6) ist oder zwischen dem Endglied (8) und demjenigen Glied, welches relativ zur der dem Drehmomentsensor (D2) zugeordneten Drehachse (A2) drehbar gelagert ist, angeordnet ist, und das andere dieser Glieder das Anfangsglied (1) ist oder zwischen dem Anfangsglied (1) und demjenigen Glied, welches relativ zur der dem Drehmomentsensor (D2) zugeordneten Drehachse (A2) drehbar gelagert ist, angeordnet ist.

10. Verfahren nach Anspruch 8 oder 9, bei dem das Glied oder das weitere Glied, welches um 180° gedreht wird, das Endglied (6) ist oder zwischen dem Endglied (8) und demjenigen Glied, welches relativ zur der dem Drehmomentsensor (D2) zugeordneten Drehachse (A2) drehbar gelagert ist, angeordnet ist, und die dem entsprechenden Glied zugeordnete Drehachse und die dem Drehmomentsensor (D2) zugeordnete Drehachse sich schneiden und eine Ebene bilden, in der der Schwerpunkt der Glieder liegt, die zwischen der dem Drehmomentsensor (D2) zugeordneten Drehachse (A2) und dem entsprechenden Glied, welches um 180° gedreht wird, angeordnet sind.

11. Verfahren nach einem der Ansprüche 1 bis 10, bei dem die Gelenke (J1, J3, J5, J7), dessen zugeordnete Drehachsen (A1, A3, A5, A7) als Rollachsen ausgeführt sind, Torsionsgelenke sind, und die Gelenke (J2, J4, J6), dessen zugeordneten Drehachsen (A2, A4, A6) als Kippachsen ausgeführt sind, Rotationsgelenke oder Revolvergelenke sind.

12. Verfahren nach einem der Ansprüche 1 bis 11, aufweisend Bewegen der Glieder (G2-G8), insbesondere gesteuert durch die Steuervorrichtung (10), sodass die für zum Justieren des Drehmomentsensors (D2, D3) vorgesehene erste Stellung der Roboterarm (1) derart ausgerichtet wird, dass alle als Rollachsen ausgeführten Drehachsen (A1, A3, A5, A7) parallel, insbesondere entlang einer gemeinsamen Geraden, ausgerichtet sind.

13. Roboter, aufweisend

- einen Roboterarm (1), der als eine offene kinematische Kette ausgebildet ist, einen Drehmomentsensor (D2, D3), eine Befestigungsvorrichtung (3) zum Befestigen eines Endeffektors (4), mehrere Gelenke (J1-J7), und mehrere, nacheinander angeordnete und mittels der Gelenke (J1-J7) verbundene Glieder (G1-G8) aufweist, welche bezüglich Drehachsen (A1-A7) relativ zueinander bewegbar sind, wobei der Drehmomentsensor (D2, D3) vorgesehen ist, ein Drehmoment zu messen, welches einer der Drehachsen (A1-A7) zugeordnet ist, eines der Glieder ein, einen Anfang des Roboterarms (1) bildendes Anfangsglied (G1) und ein weiteres der Glieder ein, ein Ende des Roboterarms bildendes Endglied (G8) des Roboterarms (1) ist, das Endglied (G8) die Befestigungsvorrichtung (3) umfasst, und ein Teil der Drehachsen (A1, A3, A5, A7) als Rollachsen und ein weiterer Teil der Drehachsen (A2, A4, A6) als Kippachsen ausgebildet sind, wobei die dem Endglied (G8) zugeordnete Drehachse (A7) und die Drehachse, die dem Glied, das dem Anfangsglied direkt nachfolgt, als Rollachsen ausgeführt sind,
- Antriebe mit Motoren, wobei zumindest die Motoren in und/oder am Roboterarm (1) angeordnet sind, und wobei die Antriebe vorgesehen sind, die Glieder (G2-G8) bezüglich ihrer Drehachsen (A1-A7) zu bewegen,
- eine mit den Antrieben verbundene elektronische Steuervorrichtung (10), die eingerichtet ist, das Verfahren nach einem der Ansprüche 1 bis 12 durchzuführen.

**Claims**

1.  A method for adjusting a torque sensor (D2, D3) of a robot arm (1), the robot arm (1) being designed as an open kinematic chain, a fastening device (3) for fastening an end effector (4), several joints (J1- J7), and a plurality of links (G1-G8) arranged one after the other and connected by means of the joints (J1-J7), one of the links (G1-G8) being an initial link (G1) forming a start of the robot arm (1) and another of the links is an end link (G8) which forms one end of the robot arm (1), and the end link (G8) comprises the fastening device (3), and the joints (J1-J7) each have an axis of rotation (A1-A7) is assigned and the links (G1-G8) are movable relative to each other with respect to the axes of rotation (A1-A7), part of the axes of rotation (A1, A3, A5, A7) as rolling axes and a further part of the axes of rotation (A2, A4, A6) are designed as tilt axes, and at least the joint between the end link (G8) and the end link (G8) upstream link (G7) assigned axis of rotation (A7) and the axis of rotation (A1) assigned to the joint between the initial link (G1) and the initial link (g1) directly downstream link (G1), are designed as rolling axes, and the Torque sensor (D2, D3) is provided to measure a torque which is assigned to one of the axes of rotation (A1-A7), having the following method steps:

    - measurement of a first torque, which is assigned to the axis of rotation (A2, A3) assigned to the torque sensor (D2, D3), in a first position of the robot arm (1) provided for adjusting the torque sensor (D2, D3) and by means of the torque sensor (D2, D3),
    - rotation of a link (G2, G4) around an axis of rotation (A1, A7) designed as its roll axis by 180°, in particular controlled by the control device (10), so that the robot arm (1) is used for adjusting the torque sensor (D2, D3) provided second position is aligned, the link (G2, G4) rotated by 180° being rotated about a different axis of rotation than the axis of rotation assigned to the torque sensor (D2, D3),
    - measuring in the second position and by means of the torque sensor (D2, D3) of a second torque which is assigned to the axis of rotation (A2, A3) assigned to the torque sensor (D2, D3),
    - determining an offset torque of the torque sensor by calculating the arithmetic mean value of the measured first and second torque, and
    - adjustment of the torque sensor (D2, D3) depending on the calculated offset torque.

2.  The method according to claim 1, comprising, for each of the positions of the robot arm (1) provided for adjusting the torque sensor (D2, D3), measuring two torques by means of the torque sensor (D2, D3), wherein for each of the positions the link of the robot arm (1), which is rotatably mounted about that axis of rotation (A2, A3) which is assigned to the torque sensor (D2, D3), in each case from the two possible approach directions in the corresponding intended for adjusting the torque sensor (D2, D3) positions is moved.

3.  The method according to claim 1 or 2, in which that axis of rotation (A3) which is assigned to the torque sensor (D3) is designed as a roll axis, and having moving the links (G2-G8), in particular controlled by the control device (10), so that the robot arm (1) for the first position provided for adjusting the torque sensor (D3) is aligned in such a way that the axis of rotation (A3) assigned to the torque sensor (D3) and designed as a roll axis and the axis of rotation (A1) that the link (G2) is assigned, which is rotated by 180°, are aligned parallel, in particular along a common straight line.

4.  The method according to claim 3, wherein the link (G2) rotated by 180°, starting from the link which is rotatably mounted about the axis of rotation (A3) designed as a roll axis, whose associated torque sensor (D3) is adjusted, the next possible, the starting link (G1) facing, is rotatably mounted about a roll axis link.

5.  The method according to claim 3, wherein the axis of rotation assigned to the torque sensor is assigned to a link which is the next possible following linkstarting from the initial link (G1) with an associated roll axis, and the link rotated by 180° is in turn the next possible following link with a associated roll axis, and in particular in which the center of gravity of the links, which are arranged between the axis of rotation assigned to the torque sensor and the roll axis rotated by 180°, on which the axis of rotation assigned to the torque sensor lies.

6. The method according to claim 1 or 2, in which that axis of rotation (A2) which is assigned to the torque sensor (D2) is designed as a tilt axis.

7. The method according to claim 6, additionally comprising the following method steps:

- in particular controlled by the control device (10), rotating a further link (G2, G4) around its axis of rotation designed as a roll axis by 180°, so that the robot arm (1) is aligned for a third position provided for adjusting the torque sensor (D2), and by means of the torque sensor (D2), measuring a third torque which is assigned to the axis of rotation (A2) assigned to the torque sensor (D2), and
- controlled in particular by the control device, rotating the link (G2, G4) around its axis of rotation designed as a roll axis by 180°, so that the robot arm (1) is aligned for a fourth position provided for adjusting the torque sensor (D2), and by means of the torque sensor (D2), measuring a fourth torque which is assigned to the axis of rotation (A2) assigned to the torque sensor (D2).

8. The method according to claim 7, comprising moving the links (G2-G8), in particular controlled by the control device (10), so that the robot arm (1) for the position provided for adjusting the torque sensor (D3) is aligned such that the as Rolling axes executed axes of rotation, which are assigned to the links, which are rotated by 180°, are aligned parallel, in particular along a common straight line.

9. The method according to claim 7 or 8, wherein the link or the further link which is rotated by 180°, the end link (6) or between the end link (8) and that link which is relative to the axis of rotation (A2) associated with the torque sensor (D2) is rotatably mounted, and the other of these links is the initial link (1) or between the initial link (1) and that link which is rotatable relative to the axis of rotation (A2) associated with the torque sensor (D2) is stored, is arranged.

10. The method according to claim 8 or 9, wherein the link or the further link which is rotated by 180°, the end link (6) or between the end link (8) and that link which is relative to the torque sensor (D2) assigned axis of rotation (A2) is rotatably mounted, and the axis of rotation assigned to the corresponding link and the axis of rotation assigned to the torque sensor (D2) intersect and form a plane in which the center of gravity of the links lies between that of the torque sensor (D2) associated axis of rotation (A2) and the corresponding link, which is rotated by 180°, are arranged.

11. The method according to any one of claims 1 to 10, in which the joints (J1, J3, J5, J7), whose associated axes of rotation (A1, A3, A5, A7) are designed as rolling axes, are torsion joints, and the joints (J2 , J4, J6), whose assigned axes of rotation (A2, A4, A6) are designed as tilting axes, are rotary joints or turret joints.

12. The method according to any one of claims 1 to 11, comprising moving the links (G2-G8), in particular controlled by the control device (10), so that the first position of the robot arm (1) provided for adjusting the torque sensor (D2, D3) is aligned in such a way that all axes of rotation (A1, A3, A5, A7) designed as roll axes are aligned in parallel, in particular along a common straight line.

13. Robots, having

- a robot arm (1) which is designed as an open kinematic chain, a torque sensor (D2, D3), a fastening device (3) for fastening an end effector (4), several joints (J1-J7), and several one after the other and by means of the joints (J1-J7) connected links (G1-G8) which are movable relative to one another with respect to axes of rotation (A1-A7), the torque sensor (D2, D3) being provided to measure a torque which one of the axes of rotation (A1-A7) is assigned, one of the links is an initial link (G1) forming a beginning of the robot arm (1) and another of the links is an end link (G8) of the robot arm (1) which forms an end of the robot arm end link (G8) comprises the fastening device (3), and some of the axes of rotation (A1, A3, A5, A7) are designed as rolling axes and a further part of the axes of rotation (A2, A4, A6) are designed as tilting axes, the end element (G8) assigned axis of rotation (A7) and the axis of rotation assigned to the link, that directly follows the initial link, are designed as roll axes,
- drives with motors, with at least the motors being arranged in and/or on the robot arm (1), and with the drives being provided to move the links (G2-G8) with respect to their axes of rotation (A1-A7),

- an electronic control device (10) which is connected to the drives and is set up to carry out the method according to one of claims 1 to 12.

**Revendications**

1. Procédé de réglage d'un capteur de couple (D2, D3) d'un bras de robot (1), le bras de robot (1) étant conçu comme une chaîne cinématique ouverte, un dispositif de fixation (3) pour fixer un effecteur d'extrémité (4), plusieurs articulations (J1-J7), et une pluralité de liaisons (G1-G8) disposées les unes à la suite des autres et reliées au moyen des articulations (J1-J7), l'une des liaisons (G1-G8) étant une liaison initiale (G1) formant un début du bras de robot (1) et un autre des maillons est un maillon d'extrémité (G8) qui forme une extrémité du bras de robot (1), et le maillon d'extrémité (G8) comprend le dispositif de fixation (3), et les articulations (J1-J7) ont chacune un axe de rotation (A1-A7) est affecté et les liaisons (G1-G8) sont mobiles les unes par rapport aux autres par rapport aux axes de rotation (A1-A7), une partie des axes de rotation (A1, A3, A5, A7) comme axes de roulement et une autre partie des axes de rotation (A2, A4, A6) sont conçues comme des axes d'inclinaison, et au moins l'articulation entre le maillon d'extrémité (G8) et le maillon d'extrémité (G8) le maillon amont (G7) affecté à l'axe de rotation (A7) a et l'axe de rotation (A1) affecté à l'articulation entre le lien initial (G1) et le lien initial (g1) directement en aval du lien (G1), sont conçus comme des axes de roulement, et le capteur de couple (D2, D3) est fourni pour mesurer un couple qui est affecté à l'un des axes de rotation (A1-A7), ayant les étapes de méthode suivantes :

   - mesure d'un premier couple, qui est affecté à l'axe de rotation (A2, A3) affecté au capteur de couple (D2, D3), dans une première position du bras de robot (1) prévu pour régler le capteur de couple (D2, D3) et au moyen du capteur de couple (D2, D3),
   - rotation d'un maillon (G2, G4) autour d'un axe de rotation (A1, A7) conçu comme son axe de roulis de 180°, notamment commandé par le dispositif de commande (10), de sorte que le bras du robot (1) est utilisé pour régler le capteur de couple (D2, D3) à condition que la seconde position soit alignée, la biellette (G2, G4) tournée de 180° étant tournée autour d'un axe de rotation différent de l'axe de rotation affecté au capteur de couple (D2, D3),
   - mesure dans la deuxième position et au moyen du capteur de couple (D2, D3) d'un deuxième couple qui est affecté à l'axe de rotation (A2, A3) affecté au capteur de couple (D2, D3),
   - déterminer un couple de décalage du capteur de couple en calculant la valeur moyenne arithmétique des premier et deuxième couples mesurés, et
   - réglage du capteur de couple (D2, D3) en fonction du couple de décalage calculé.

2. Procédé selon la revendication 1, comprenant, pour chacune des positions du bras de robot (1) prévu pour le réglage du capteur de couple (D2, D3), la mesure de deux couples au moyen du capteur de couple (D2, D3), dans lequel, pour chacune des positions, la biellette du bras de robot (1), qui est montée rotative autour de l'axe de rotation (A2, A3) qui est affecté au capteur de couple (D2, D3), respectivement parmi les deux possibles directions d'approche dans les positions correspondantes destinées au réglage des capteurs de couple (D2, D3) est déplacée.

3. Procédé selon la revendication 1 ou 2, dans lequel l'axe de rotation (A3) qui est affecté au capteur de couple (D3) est conçu comme un axe de roulis, et comportant des liaisons mobiles (G2-G8), notamment commandé par le dispositif de commande (10), de sorte que le bras de robot (1) pour la première position prévue pour le réglage du capteur de couple (D3) est aligné de telle sorte que l'axe de rotation (A3) affecté au capteur de couple ( D3) et conçu comme un axe de roulis et l'axe de rotation (A1) auquel est affecté le maillon (G2), qui est tourné de 180°, sont alignés parallèlement, en particulier le long d'une ligne droite commune.

4. Procédé selon la revendication 3, dans lequel la bielle (G2) a pivoté de 180°, à partir de la bielle qui est montée rotative autour de l'axe de rotation (A3) conformé en axe de roulis, dont le capteur de couple associé (D3) est réglée, la prochaine possible, la biellette de départ (G1) en regard, est montée rotative autour d'une biellette d'axe de roulis.

5. Procédé selon la revendication 3, dans lequel l'axe de rotation affecté au capteur de couple est affecté à un lien qui est le prochain lien suivant possible partant du lien initial (G1) avec un axe de roulis associé, et le lien tourné de 180 ° est à son tour le prochain maillon suivant possible avec un axe de roulis associé, et notamment dans lequel le centre de gravité des maillons, qui sont disposés entre l'axe de rotation affecté au capteur de couple et l'axe de roulis tourné de 180°, sur lequel se trouve l'axe de rotation affecté au capteur de couple.

6. Procédé selon la revendication 1 ou 2, dans lequel l'axe de rotation (A2) qui est affecté au capteur de couple (D2) est conçu comme un axe d'inclinaison.

7. Procédé selon la revendication 6, comprenant en outre les étapes de procédé suivantes :

- en particulier commandé par le dispositif de commande (10), faisant tourner une autre biellette (G2, G4) autour de son axe de rotation conçu comme un axe de roulis de 180°, de sorte que le bras du robot (1) est aligné pour une troisième position prévue pour régler le capteur de couple (D2), et au moyen du capteur de couple (D2), mesurer un troisième couple qui est affecté à l'axe de rotation (A2) affecté au capteur de couple (D2), et
- commandé notamment par le dispositif de commande, faisant tourner la biellette (G2, G4) autour de son axe de rotation réalisé en axe de roulis de 180°, de sorte que le bras du robot (1) soit aligné pour une quatrième position prévue pour le réglage du couple capteur (D2), et au moyen du capteur de couple (D2), mesurer un quatrième couple qui est affecté à l'axe de rotation (A2) affecté au capteur de couple (D2).

8. Procédé selon la revendication 7, comprenant le déplacement des biellettes (G2-G8), notamment commandées par le dispositif de commande (10), de sorte que le bras du robot (1) pour la position prévue pour le réglage du capteur de couple (D3) est aligné de telle sorte que les axes de rotation exécutés au fur et à mesure des axes de roulement, qui sont affectés aux maillons, qui sont tournés de 180°, soient alignés parallèlement, notamment le long d'une ligne droite commune.

9. Procédé selon la revendication 7 ou 8, dans lequel le maillon ou le maillon supplémentaire qui est tourné de 180°, le maillon d'extrémité (6) ou entre le maillon d'extrémité (8) et ce maillon qui est relatif à l'axe de rotation (A2) associé au capteur de couple (D2) est monté rotatif, et l'autre de ces bielles est la bielle initiale (1) ou entre la bielle initiale (1) et celle qui est rotative par rapport à l'axe de rotation (A2) associé au capteur de couple (D2) est mémorisé, est agencé.

10. Procédé selon la revendication 8 ou 9, dans lequel le lien ou le lien supplémentaire qui est tourné de 180°, le lien d'extrémité (6) ou entre le lien d'extrémité (8) et ce lien qui est relatif au capteur de couple (D2) l'axe de rotation (A2) affecté est monté rotatif, et l'axe de rotation affecté à la bielle correspondante et l'axe de rotation affecté au capteur de couple (D2) se coupent et forment un plan dans lequel le centre de gravité des bielles se situe entre celui du capteur de couple (D2) associé à l'axe de rotation (A2) et la bielle correspondante , qui est tournée de 180°, sont disposés.

11. Procédé selon l'une quelconque des revendications 1 à 10, dans lequel les articulations (J1, J3, J5, J7), dont les axes de rotation associés (A1, A3, A5, A7) sont conçus comme des axes de roulement, sont à torsion articulations, et les articulations (J2, J4, J6), dont les axes de rotation affectés (A2, A4, A6) sont conçus comme des axes d'inclinaison, sont des articulations rotatives ou des articulations à tourelle.

12. Procédé selon l'une quelconque des revendications 1 à 11, comprenant le déplacement des biellettes (G2-G8), notamment commandées par le dispositif de commande (10), de sorte que la première position du bras du robot (1) prévue pour le réglage le capteur de couple (D2, D3) est aligné de telle sorte que tous les axes de rotation (A1, A3, A5, A7) conçus comme des axes de roulis soient alignés parallèlement, en particulier le long d'une ligne droite commune.

13. Robots, ayant

- un bras de robot (1) qui est conçu comme une chaîne cinématique ouverte, un capteur de couple (D2, D3), un dispositif de fixation (3) pour fixer un effecteur d'extrémité (4), plusieurs articulations (J1-J7), et plusieurs l'un après l'autre et au moyen des articulations (J1-J7) reliées entre elles (G1-G8) qui sont mobiles l'une par rapport à l'autre par rapport aux axes de rotation (A1-A7), le capteur de couple (D2, D3) étant prévu pour mesurer un couple auquel est affecté l'un des axes de rotation (A1-A7), l'une des liaisons est une liaison initiale (G1) formant un début de bras de robot (1) et une autre des liaisons est une liaison d'extrémité (G8) du bras de robot (1) qui forme une extrémité de la biellette d'extrémité de bras de robot (G8) comprend le dispositif de fixation (3), et certains des axes de rotation (A1, A3, A5, A7) sont conçus comme les axes de roulement et une autre partie des axes de rotation (A2, A4, A6) sont conçus comme des axes de basculement, l'élément d'extrémité (G8) étant affecté à l'axe de rotation (A7) et l'axe de rotation affecté au lien, qui suit la ligne initiale k, sont conçus comme des axes de roulis,
- des entraînements à moteurs, au moins les moteurs étant disposés dans et/ou sur le bras du robot (1), et les entraînements étant prévus pour déplacer les maillons (G2-G8) par rapport à leurs axes de rotation (A1-A7),

- un dispositif électronique de commande (10) qui est connecté aux variateurs et est configuré pour mettre en oeuvre le procédé selon l'une des revendications 1 à 12.

# FIG. 1

# FIG. 2

# FIG. 3

FIG. 4

EP 3 253 540 B1

FIG. 5

21

FIG. 6

# FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8649906 B2
- US 2008028824 A1
- DE 102013212433 A1